# EUROPÄISCHE PATENTSCHRIFT

(11) **EP 0 502 318 B1**
(45) Veröffentlichungstag und Bekanntmachung des Hinweises auf die Patenterteilung: **05.07.1995**
(21) Anmeldenummer: 92101655.6
(22) Anmeldetag: 01.02.1992
(51) Int. Cl.: B23K 35/38

(54) **Schutzgas zum WIG-, MIG-, MAG- und Plasmaschweissen**
Shielding gas for TIG, MIG, MAG and plasma welding
Gaz protecteur pour le soudage TIG, MIG, MAG et à plasma

(30) Priorität: 05.03.1991 DE 4106900
(43) Veröffentlichungstag der Anmeldung: 09.09.1992
(73) Patentinhaber: MESSER GRIESHEIM GMBH, D-60270 Frankfurt (DE)
(72) Erfinder: Farwer, Alfward, Dr., W-4005 Meerbusch 3 (DE)

(56) Entgegenhaltungen:
- DE-B- 1 000 940
- DE-B- 1 215 835
- DE-C- 4 028 074
- FR-A- 1 413 620
- GB-A- 873 406
- US-A- 3 149 220
- US-A- 3 526 740
- WELDING JOURNAL.(SUPPLEMENT) Bd. 63, Nr. 5, Mai 1984, MIAMI US Seiten 150 -155; V.P.KUJANPÄÄ ET AL: 'Role of Shielding Gases in Discontinuity Formation inGTA Welding of Austenitic Stainless Steel Strips'

## Beschreibung

Die Erfindung betrifft ein Schutzgas zum WIG-, MIG-, MAG- und Plasmaschweißen aus Argon oder einem argonhaltigen Gasgemisch nach dem Oberbegriff des Anspruches 1, Sowie ein Verfahren nach dem Oberbegriff des Anspruches 3.

Beim WIG-, MIG-, MAG- und Plasmaschweißen verwendet man ganz überwiegend reines Argon oder argonhaltige Gasgemische mit den Komponenten Helium, Wasserstoff, Sauerstoff und Kohlendioxid. Hierbei wird eine hohe Reinheit des Schutzgases angestrebt, weil Verunreinigungen, z.B. Feuchte, zu schwerwiegenden Schweißfehlern führen können. Während früher, wie es beispielsweise die DE-A-1000940 zeigt, eine Mindestreinheit von 99,99 % gefordert wurde, d.h. maximal 100 vpm Verunreinigungen, insbesondere Stickstoff zugelassen wurden, wird heute eine Reinheit besser als 99,996 % verlangt, d.h. die Summe aller Verunreinigungen darf höchstens 40 vpm betragen. Entsprechendes gilt für Gemische aus Argon und Helium. Sofern das Schutzgasgemisch kein Helium enthält, liegt der Argonanteil oberhalb 50%, in der Mehrzahl der Anwendungen bei 80% bis 90%. Bei heliumhaltigen Gemischen liegt der Argonanteil meistens bei 50%, teilweise wird auch mit Heliumanteilen von über 50% gearbeitet.

Höhere Gehalte an Stickstoff sind vereinzelt verwendet worden in Versuchsreihen zur Untersuchung des Schutzgaseinflusses beim WIG-Schweißen von austenitischen Stählen. So wird in "Welding Journal, Bd. 63, Nr. 5, Mai 1984, Miami US, Seiten 150-155, V.P. Kujanpää u.a., Role of Shielding Gases in Discontinuity Formation in GTA Welding of Austenitic Stainless Steel Strips" eine Schutzgaszusammensetzung aus Ar, 0,3% CO₂ und 0,013 % N₂ genannt.

Für die Auswahl des Schutzgases sind metallurgische und verfahrenstechnische Gesichtspunkte maßgeblich. Da dabei eine Vielzahl von zum Teil gegenläufigen Kriterien zu beachten ist, handelt es sich hierbei zwangsläufig um einen Kompromiß. Wichtige Kriterien für die Schutzgasauswahl beim WIG-Schweißen sind z.B. Zündverhalten, Elektrodenbelastbarkeit, Lichtbogenstabilität, Einbrandprofil, Viskosität der Schmelze und Metallurgie der Schmelze.

Der Erfindung liegt die Aufgabe zugrunde, für diese Schutzgasgemische die Schweißeigenschaften zu verbessern.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Weiterhin wird ein Verfahren gemäß dem Anspruch 3 vorgeschlagen.

Vorteilhafte Weiterbildungen der Erfindung sind in den Unteransprüchen angegeben.

Es hat sich überraschend gezeigt, daß durch die erfindungsgemäße Beimischung geringer Mengen von Stickstoff, welche einerseits deutlich über den zulässigen maximalen Verunreinigungen im Schutzgas liegen, andererseits aber auch deutlich unter den üblichen Beimischungsmengen von Gasgemischen liegen, sich vorteilhafte Effekte ergeben. Der Spielraum für die Stickstoffzugabe ist daher sehr eng und bewegt sich zwischen mindestens 80 vpm und höchstens 250 vpm.

Es hat sich überraschend gezeigt, daß sich durch diese vergleichsweise geringen Beimischungen von Stickstoff verfahrenstechnische Verbesserungen erreichen lassen, wobei die durch Stickstoff hervorgerufenen metalllurgisch störenden Effekte nicht auftreten. Dies gilt nicht nur für die Stahlwerkstoffe, sondern auch für Kupfer, Nickel und Aluminium. Ein besonderer Vorteil des erfindungsgemäßen Schutzgases ist die Einbrandintensivierung ohne Verschlechterung des Zwangslagensverhaltens.

Nicht geeignet ist das Gemisch für die sogenannten gasempfindlichen Werkstoffe Titan, Niob, Tantal und Molybdän, für die bekanntlich die Standardreinheiten, z.B. 99,996% für Schweißargon, nicht ausreichend sind.

Mit den heutigen technischen Möglichkeiten läßt sich das erfindungsgemäße Schutzgas problemlos als Fertiggemisch großtechnisch herstellen, oder beim Anwender mit Zentralversorgungsanlagen über Konzentrate beimischen.

## Patentansprüche

1. Schutzgas zum WIG-, MIG-, MAG- und Plasmaschweißen, bestehend aus Argon und einer oder mehreren Komponenten aus der Gruppe Helium, Wasserstoff, Sauerstoff und Kohlendioxid, wobei dieses Gemisch eine Reinheit besser als 99,996% besitzt, ausgenommen Gemische aus Argon und Helium sowie Kohlendioxidgehalte gleich oder kleiner 0,3 Vol-%,
gekennzeichnet durch eine Beimischung von 80 vpm bis 250 vpm Stickstoff.

2. Schutzgas nach Anspruch 1,
gekennzeichnet durch eine Beimischung von 120 vpm bis 180 vpm Stickstoff.

3. Verfahren zum WIG-, MIG-, MAG- und Plasmaschweißen mit einem Schutzgas aus Argon und einer oder mehreren Komponenten aus der Gruppe Helium, Wasserstoff, Sauerstoff und Kohlendioxid, wobei dieses Gemisch eine Reinheit besser als 99,996% besitzt, ausgenommen Gemische aus Argon und Helium sowie Kohlendioxidgehalte gleich oder kleiner 0,3 Vol-%,
dadurch gekennzeichnet,
daß dem Schutzgas 80 vpm bis 250 vpm Stickstoff beigemischt sind.

4. Verfahren nach Anspruch 3,
dadurch gekennzeichnet,
daß dem Schutzgas 120 vpm bis 180 vpm Stickstoff beigemischt sind.

## Claims

1. Shielding gas for TIG, MIG, MAG and plasma welding, consisting of argon and one or more components from the group consisting of helium, hydrogen, oxygen and carbon dioxide, said mixture having a purity of better than 99.996%, with the exception of mixtures of argon and helium and carbon dioxide contents equal to or less than 0.3% by volume, characterized by an admixture of from 80 vpm to 250 vpm of nitrogen.

2. Shielding gas according to Claim 1, characterized by an admixture of from 120 vpm to 180 vpm of nitrogen.

3. Method for TIG, MIG, MAG and plasma welding, with a shielding gas consisting of argon and one or more components from the group consisting of helium, hydrogen, oxygen and carbon dioxide, said mixture having a purity of better than 99.996%, with the exception of mixtures of argon and helium and carbon dioxide contents equal to or less than 0.3% by volume, characterized in that the shielding gas is admixed with from 80 vpm to 250 vpm of nitrogen.

4. Method according to Claim 3, characterized in that the shielding gas is admixed with from 120 vpm to 180 vpm of nitrogen.

## Revendications

1. Gaz protecteur pour le soudage TIG, MIG, MAG et à plasma, comprenant de l'argon et un ou plusieurs composants du groupe formé par l'hélium, l'hydrogène, l'oxygène, le dioxyde de carbone, ce mélange ayant une pureté supérieure à 99,996 %, à l'exception de mélanges d'argon et d'hélium et de mélanges à teneur en dioxyde de carbone égale ou inférieure à 0,3 % en volume, caractérisé en ce qu'on ajoute de 80 à 250 ppm d'azote.

2. Gaz protecteur selon la revendication 1, caractérisé en ce que l'on ajoute entre 120 ppm et 180 ppm d'azote.

3. Procédé de soudage TIG, MIG, MAG et à plasma avec un gaz protecteur composé d'argon et d'un ou plusieurs composants du groupe comprenant l'hélium, l'hydrogène, l'oxygène, le dioxyde de carbone, ce mélange ayant une pureté supérieure à 99,996 %, à l'exception de mélanges comprenant de l'argon et de l'hélium ainsi que des teneurs en dioxyde de carbone égaux ou inférieurs à 0,3 % en volume, caractérisé en ce qu'on ajoute entre 80 ppm et 250 ppm d'azote au gaz protecteur.

4. Procédé selon la revendication 3, caractérisé en ce qu'on ajoute entre 120 ppm et 180 ppm d'azote au gaz protecteur.
